# EUROPEAN PATENT APPLICATION

(11) **EP 4 730 383 A1**
(43) Date of publication of application: **22.04.2026**
(21) Application number: 25203823.7
(22) Date of filing: 22.09.2025
(51) Int. Cl.: H01H 37/32, H01M 50/581

(54) **BATTERY DISCONNECT DEVICE AND BATTERY PACK**

(30) Priority: 17.10.2024 KR 20240142291
(71) Applicant: SAMSUNG SDI CO., LTD., Yongin-si, Gyeonggi-do 17084 (KR)
(72) Inventor: PARK, Kyunghoon, 17084 YONGIN-SI (KR)
(74) Representative: Regimbeau

(57) **Abstract**

A battery disconnect device includes a housing (210) having an open end face and a mounting part. The mounting part includes a mounting body (231) accommodating an element component (5) therein and configured to be detachably connected to the housing and a thermal conductor (235) on an inner surface of the mounting body and in contact with the element component.

## Description

### FIELD

The present disclosure relates to a battery disconnect device with increased manufacturability.

### BACKGROUND

Secondary batteries are batteries that may be charged and discharged, unlike primary batteries that may not be recharged. Low-capacity secondary batteries are used in small, portable electronic devices, such as smartphones, feature phones, laptop computers, digital cameras, and camcorders, whereas large-capacity secondary batteries are widely used as power sources for driving motors in hybrid vehicles, electric vehicles, and as power storage batteries.

Depending on the type of external device being used, secondary batteries may be used as single cells or as battery modules or battery packs in which multiple cells are connected together to form a single unit.

Battery disconnect devices are designed to improve the safety of large-capacity power sources, such as battery packs. Battery disconnect devices are devices that may be placed between the power source and the driving equipment to either supply or disconnect power to the driving equipment.

In general, a battery disconnect device includes a set of devices responsible for supplying and disconnecting power to protect the power source and the driving equipment by detecting high-voltage and high-current events that may occur in large-capacity battery systems and quickly disconnecting the power supply in response thereto.

The foregoing information disclosed in the Related Art of the disclosure is merely intended to provide a better understanding of the background of the disclosure and may therefore include information that does not constitute the related art.

### SUMMARY

A technical problem of the disclosure is to provide a battery disconnect device in which a mounting body having a thermal conductor on an inner surface is detachably connected to a housing to improve manufacturability.

According to the invention, there is provided a battery disconnect device and a battery pack as defined in the claims.

However, technical problems of the disclosure are not limited to the problem described above, and other problems not mentioned will be apparent to those skilled in the art from the description of the disclosure set forth below.

In an aspect of the disclosure, a battery disconnect device includes a housing having an open end face and a mounting part. The mounting part includes a mounting body which accommodates an element component and which is configured to be detachably connectable to the housing, and a thermal conductor on an inner surface of the mounting body and in contact with the element component.

The housing may have a mounting groove on one side of the housing opposite to the mounting body, and the mounting body may have a mounting protrusion configured to engage in the mounting groove.

The mounting body may include a pair of side walls facing each other and spaced apart from each other, and the thermal conductor may be on an inner surface of each of the pair of side walls and in contact with opposite sides of the element component.

The mounting body may further include a bottom wall connecting the pair of side walls to each other.

The thermal conductors may be between the element component and the bottom wall.

The mounting body may have a partition dividing an interior space of the mounting part into a plurality of sub-spaces.

The thermal conductors may be on at least some of the sub-spaces divided by the partition wall.

The thermal conductors may include a thermally conductive binder and a thermally conductive inorganic mixture.

The element component may include a positive relay, a negative relay, and/or a fuse.

The battery disconnect device may further include a cover configured to be fixedly connected to the housing to cover the open end face of the housing.

The housing may include an engagement protrusion on an outer surface thereof, and the cover may include an engagement hole that the engagement protrusion is configured to detachably engage.

The cover may include a plurality of engagement holes, and the engagement protrusion on the mounting body may be configured to be engaged in at least one of the engagement holes.

The element component may include a plurality of element components, and the battery disconnect device may further include a bus bar electrically connecting the plurality of element components.

In another aspect of the disclosure, a battery pack includes: a plurality of battery modules connected in series or in parallel; and a battery disconnect device electrically connected to the plurality of battery modules. The battery disconnect device includes a housing having an open end face and a mounting part. The mounting part includes a mounting body which accommodates an element component and which is configured to be detachably connectable to the housing, and a thermal conductor on an inner surface of the mounting body and in contact with the element component.

The mounting body may include a pair of side walls facing each other and spaced apart from each other, and the thermal conductor may be on the inner surfaces of the pair of side walls and in contact with opposite sides of the element component.

The mounting body may further include a bottom wall connecting the pair of side walls to each other.

The thermal conductors may be between the element component and the bottom wall.

The mounting body may have a partition wall dividing an interior space of the mounting part into a plurality of sub-spaces.

The thermal conductors may be applied to some of sub-spaces divided by the partition wall.

The element component may include a positive relay, a negative relay, and/or a fuse.

### BRIEF DESCRIPTION OF THE DRAWINGS

FIG. 1 is an assembled perspective view illustrating a battery pack according to an embodiment of the disclosure.
FIG. 2 is an exploded perspective view illustrating a battery disconnect device according to an embodiment of the disclosure.
FIG. 3 is a perspective view illustrating a mounting part being mounted on a housing according to an embodiment of the disclosure.
FIG. 4 is a perspective view illustrating the mounting part having been mounted on the housing according to an embodiment of the disclosure.
FIG. 5 is a plan view of FIG. 4.
FIG. 6 is a plan view illustrating an element component mounted in a housing according to an embodiment of the disclosure.
FIG. 7A is a cross-sectional view taken along line A-A' of FIG. 6.
FIG. 7B is a cross-sectional view taken along line B-B' of FIG. 6.
FIG. 7C is a cross-sectional view taken along line C-C' of FIG. 6.
FIG. 8 is a plan view illustrating a bus bar mounted on a housing according to an embodiment of the disclosure.
FIG. 9 is a perspective view illustrating a battery disconnect device according to an embodiment of the disclosure.
FIG. 10 is a perspective view illustrating a mounting part mounted on a housing according to another embodiment of the disclosure.
FIG. 11 is a plan view of FIG. 10.
FIG. 12 is a plan view illustrating a bus bar mounted on the housing illustrated in FIG. 10.

The following drawings attached to this specification illustrate embodiments of the disclosure and, together with the detailed description of the disclosure described below, serve to further understand the technical idea of the disclosure, so that the present disclosure should not be interpreted as being limited to matters described in such drawings.

### DETAILED DESCRIPTION

Embodiments of the present disclosure will now be described in detail with reference to the accompanying drawings. Prior to this, terms or words used in this specification and claims should not be interpreted as being limited to their usual or dictionary meanings, and should be interpreted as meanings and concepts that conform to the technical idea of the disclosure based on the principle that the inventor may appropriately define the concepts of the terms to explain his or her own invention in the best way. Therefore, it should be understood that the embodiments described in this specification and the configurations depicted in the drawings are only some of the most desirable embodiments of the present disclosure and do not represent the entire technical idea of the present disclosure, so that there may be various equivalents and variants that may replace the disclosed embodiments and configurations at the time of this application. In addition, as used herein, the words "comprise", "include" and/or "comprising", "including" specify the presence of stated features, numbers, steps, operations, elements, elements and/or groups thereof, but do not preclude the presence or addition of one or more other features, numbers, operations, elements, elements and/or groups thereof. In addition, when describing embodiments of the present disclosure, "may", "may be" may include "one or more embodiments of the present disclosure."

In addition, to aid understanding of the disclosure, the accompanying drawings are not drawn to scale and the dimensions of some components may be exaggerated. In addition, like reference numbers may be assigned to like components in different embodiments.

The statement that the two things under comparison are "identical" is a statement that they are "substantially identical." Therefore, substantial identity may include cases where the deviation is considered small in the art, for example a deviation of less than 5%. In addition, uniformity of a parameter in a given region may imply uniformity from an average perspective.

Although the terms first, second, etc. are used to describe various components, these components are not limited by these terms. These terms are merely used to distinguish one component from another, and unless specifically stated otherwise, the first component may also be the second component.

Throughout the specification, unless specifically stated otherwise, respective element may be singular or plural.

When a first component is referred to as being placed "on (under)" a second component, it will be understood that the first component may be placed directly on the upper surface (or undersurface) of the second component, or that other components may be present between the second component and the first component placed on (or under) the second component.

In addition, when a first component is referred to as being "connected" or "coupled" to a second component, it should be understood that the first component may be connected or coupled directly to the second component, or that the first component may be "connected" or "coupled" to the second component with other components "interposed" between the first component and the second component, or through other components. In addition, when a part is referred to as being electrically coupled to another part, this includes not only cases where those parts are directly connected, but also cases where those parts are connected with another element interposed between the parts.

Throughout the specification, "A and/or B" refers to A, B, or A and B, unless otherwise specified. That is, "and/or" refers to all or any of combinations of the listed items. "C to D" refers to C or more and D or less, unless otherwise specified.

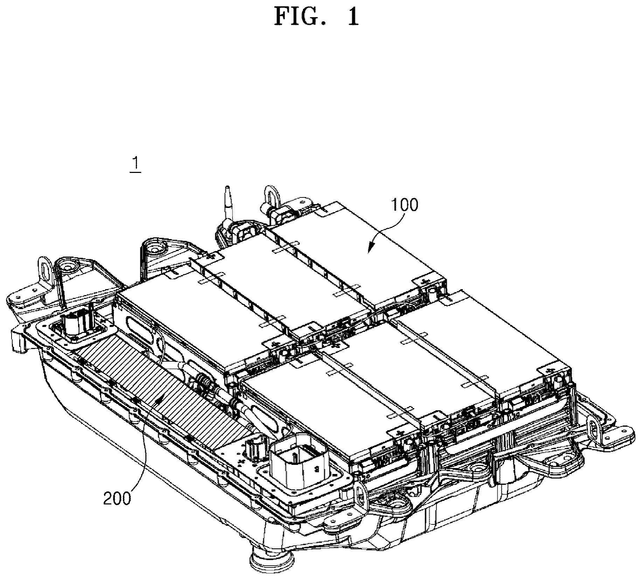

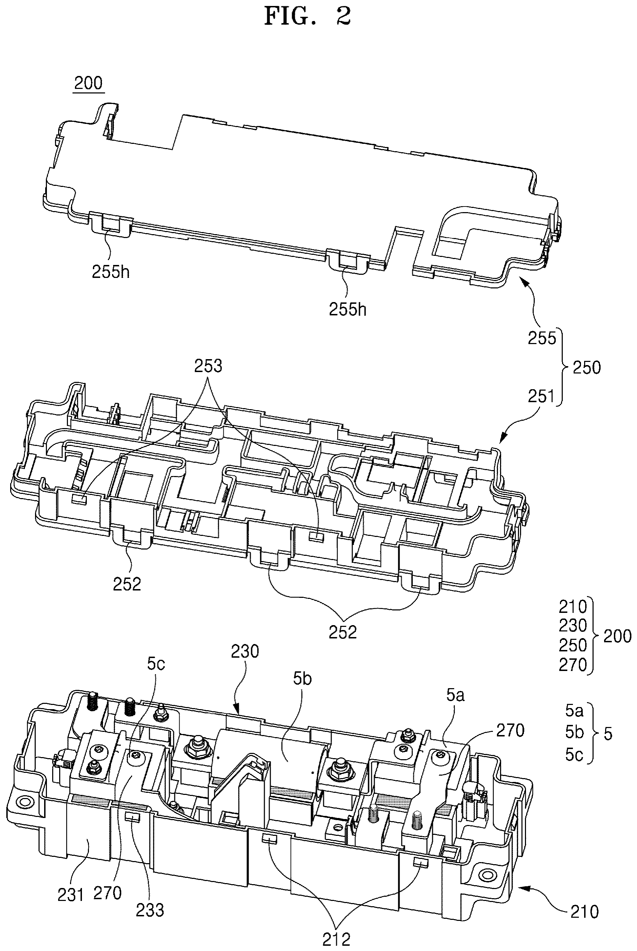

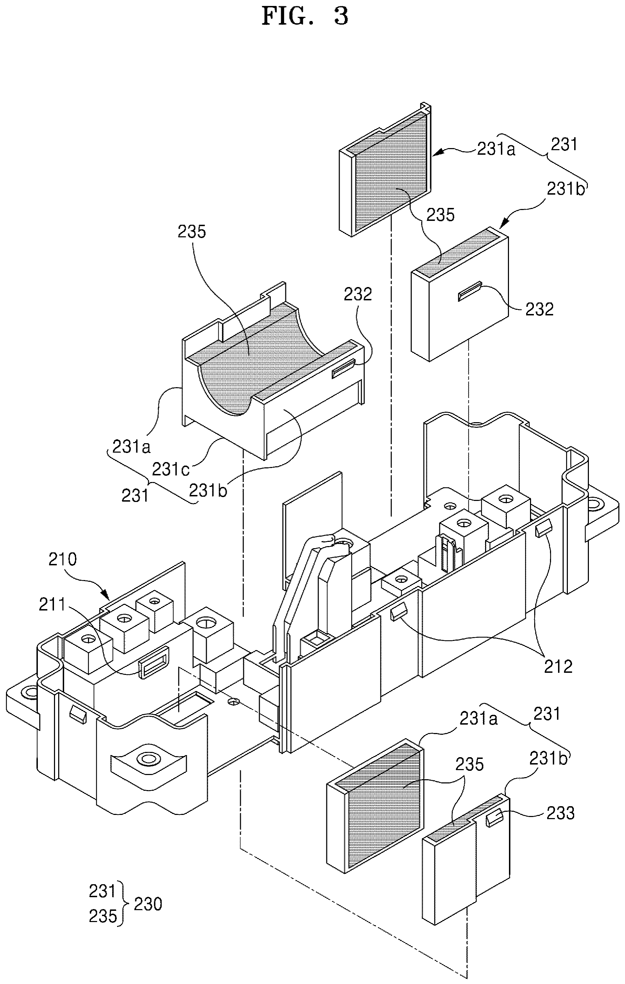

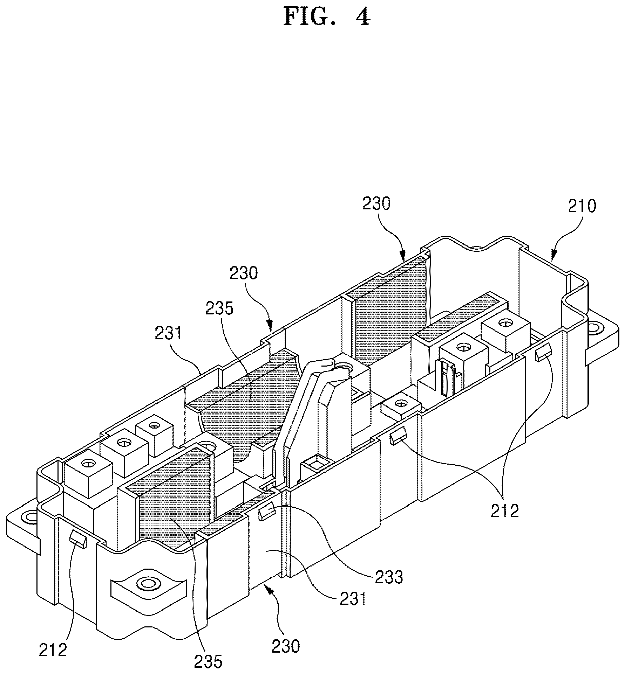

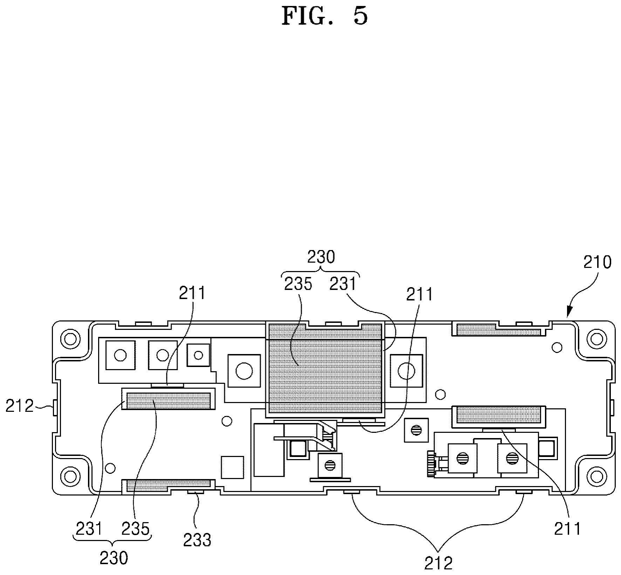

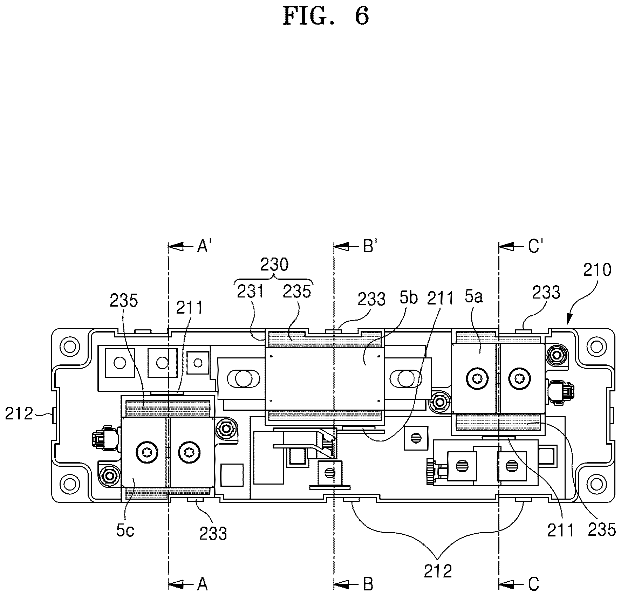

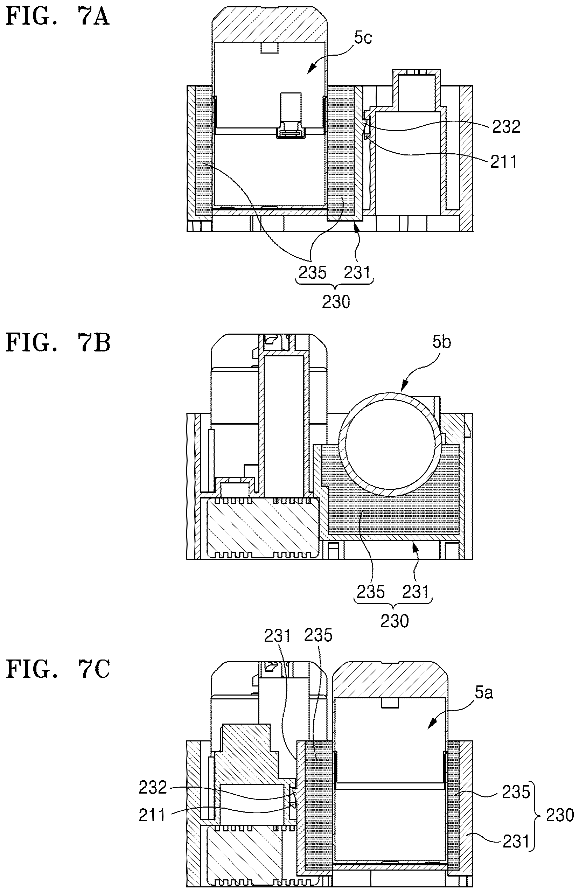

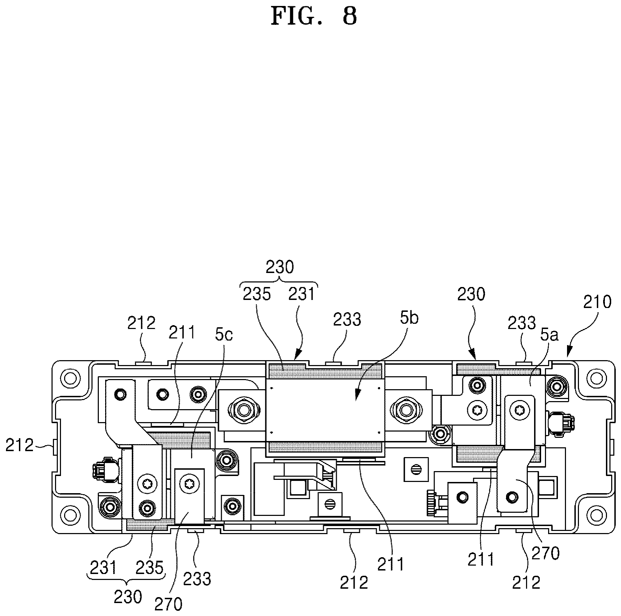

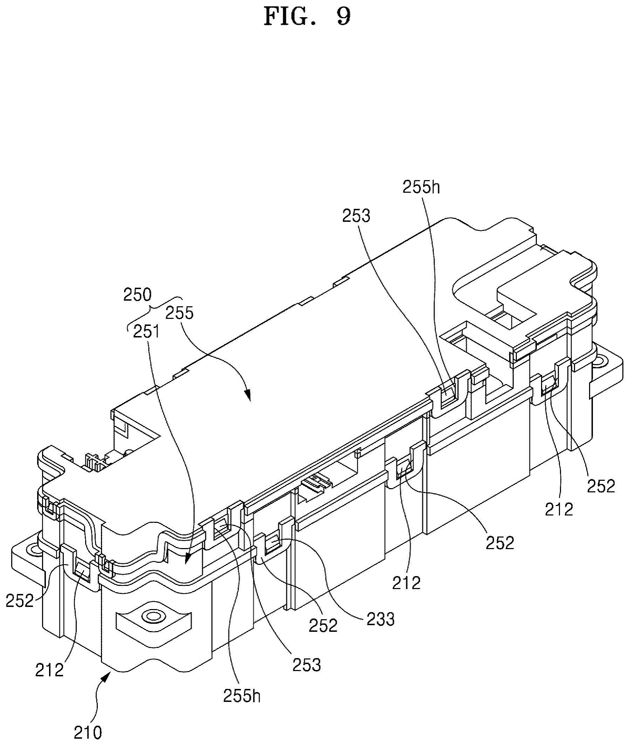

FIG. 1 is an assembled perspective view illustrating a battery pack according to an embodiment of the disclosure. FIG. 2 is an exploded perspective view illustrating a battery disconnect device according to an embodiment of the disclosure. FIG. 3 is a perspective view illustrating a mounting part being mounted on a housing according to an embodiment of the disclosure. FIG. 4 is a perspective view illustrating the mounting part having been mounted on the housing according to an embodiment of the disclosure. FIG. 5 is a plan view of FIG. 4. FIG. 6 is a plan view illustrating an element component mounted in a housing according to an embodiment of the disclosure. FIG. 7A is a cross-sectional view taken along line A-A' of FIG. 6. FIG. 7B is a cross-sectional view taken along line B-B' of FIG. 6. FIG. 7C is a cross-sectional view taken along line C-C' of FIG. 6. FIG. 8 is a plan view illustrating a bus bar mounted on a housing according to an embodiment of the disclosure. FIG. 9 is a perspective view illustrating a battery disconnect device according to an embodiment of the disclosure.

Referring to the embodiment illustrated in FIG. 1, a battery pack 1 includes a plurality of battery modules 100 connected in series and/or in parallel, and each battery module 100 may include a plurality of cells electrically connected together.

The battery pack 1 may be a large-capacity power source that may be installed on an electric vehicle to supply the voltage and current required by the vehicle, but the present disclosure is not limited thereto, and the battery pack 1 may be installed on various devices requiring a supply of large-capacity power, such as hybrid vehicles, electric motorcycles, or the like, to supply power thereto.

The battery module 100 is a module in which a plurality of cells are connected in series and/or in parallel to increase the voltage and capacity, and the cells included in the battery module 100 may be secondary batteries capable of being charged and discharged.

Referring to FIG. 1, a battery pack 1 may include a battery disconnect device 200 electrically connected to the plurality of battery modules 100.

The battery disconnect device 200 may electrically connect the power source and the driving device (e.g., the vehicle), and may disconnect power supplied to the driving device when an abnormal phenomenon, such as overcurrent flowing to power systems, occurs to prevent (or at least mitigate) a battery fire from occurring and thereby improve the safety of the battery pack 1.

Referring to FIG. 1, the battery disconnect device 200 may be mounted in an interior space of a housing of the battery pack 1 in which the plurality of battery modules 100 are accommodated.

However, the location of the battery disconnect device 200 is not limited thereto, and the battery disconnect device 200 may be externally placed on the housing of the battery pack 1 and electrically connected to the plurality of battery modules 100 arranged inside the housing of the battery pack 1 to connect and disconnect power supplied to the driving device (e.g., the vehicle).

Referring to FIGS. 2, 7, and 8, the battery disconnect device 200 is a device that includes a positive relay 5a, a negative relay 5c, a pre-charge relay, a fuse 5b, a bus bar 270, and a current sensor. The battery disconnect device 300 may operate such that the relays 5a and 5c and the fuse 5b control the flow of current.

The battery disconnect device 200 may also include a housing 210, an element component 5, a mounting part 230, a cover 250, and a bus bar 270.

Referring to FIGS. 2 to 9, the housing 210 may have an open end face (e.g., an open upper end) so that an interior space is provided in the housing to allow for attachment of one or more mounting parts 230 to be described later.

In addition, the element component 5, the bus bar 270, and a voltage/current sensor may also be positioned (located) in the interior space of the housing 210.

The housing 210 may be configured to protect the components accommodated therein from external environments, such as water, dust, and impact, thereby ensuring the safety of the battery disconnect device 200.

Referring to FIG. 3, the housing 210 may include at least one mounting groove 211 on one side thereof opposite the mounting part 230.

The mounting part 230 may be configured to be detachably attached to the mounting groove 211 in various ways, such as by a fitting method or a fastening method.

The mounting groove 211 is configured to ensure the stable attachment of the mounting part 230 without being inadvertently detached from the housing 210.

Referring to FIGS. 2 to 8, and FIG. 9, the housing 210 may include at least one engagement protrusion 212 on the outer surface thereof.

The housing 210 may include a plurality of engagement protrusions 212 spaced apart from each other along the outer surface of the housing 210.

The cover 250 may be attached to the housing 210 through engagement with the engagement protrusions 212, which will be described later. The cover 250 may be stably attached to the open end face of the housing 210 through the engagement with the engagement protrusions 212.

Referring to FIG. 6 and FIG. 7, at least one of the element components 5 (e.g., the positive relay 5a, the negative relay 5c, or the fuse 5b) may be accommodated in the mounting part 230 in a manner as to be electrically connected to the battery pack 1 or battery module 100 to control the power supply of an electric circuit or power system.

The element component 5 may include at least one of the positive relay 5a, the negative relay 5c, or the fuse 5b.

The positive relay 5a or negative relay 5c is an element component that is configured to cut off the power supply from the power source to the driving equipment (e.g., the vehicle) in the event of a problem, such as overvoltage or overcurrent being applied to the power system. The positive relay 5a may be connected to the positive terminal and the negative relay 5c may be connected to the negative terminal.

In an embodiment of the present disclosure, the relay 5a or 5c may be an electromagnetic relay that is configured to be turned on or off using electromagnetic force, or a semiconductor relay that is configured to control a supply of power using a semiconductor device (TRIAC, MOSFET, or the like).

However, the relay is not limited thereto, and it may be any suitable type or kind of relay, such as thermal relays, mechanical relays, photo relays, optical relays, electrostatic relays, or the like.

The fuse 5b is an element component 5 that detects overcurrent flowing through a circuit and cuts off the circuit, which may increase the safety and reliability of a power system, like the relay 5a or 5c.

In an embodiment of the present disclosure, the fuse 5b may be a blade fuse, a mini fuse, a high-speed fuse, a temperature fuse, or a high-voltage fuse.

Referring to FIGS. 2 to 9, the mounting part 230 may be a component that accommodates the element component 5, and the mounting part 230 may include a mounting body 231 and a thermal conductor 235.

The mounting part 230 may accommodate the element component 5 therein such that the element component 5 may be in contact with the mounting part 230.

Referring to FIGS. 2 to 9, the mounting body 231 may be configured to be detachably coupled to the housing 210, and the mounting body 231 may include side walls 231a and 231b and a bottom surface 231c.

Referring to FIG. 3, the mounting body 231 may include a mounting protrusion 232 that is configured to be fastened to the mounting groove 211 on the housing 210.

In some embodiments, the mounting protrusion 232 may be arranged on one side of the mounting body 231 opposite to the inner side of the housing 210 on which the mounting groove 211 is located.

The mounting protrusion 232 may be coupled with the mounting groove 211 in an inter-fastening manner, thereby preventing the mounting body 231 from being inadvertently detached from the housing 210 and forming a firm connection therebetween.

Referring to FIGS. 2 to 9, the side walls 231a and 231b of the mounting body 231 are provided in a pair so that the side walls are spaced apart oppositely from each other (e.g., the side walls 231a and 231b face each other), and a thermal conductor 235, to be described later, may be on the inner surface of each of the pair of side walls 231a and 231b.

In an embodiment of the present disclosure, the pair of side walls 231a and 231b may be bent into a substantial shape of '[ ]' in a direction of surrounding the element component 5 (e.g., the side walls 231a and 231b may be generally U-shaped channels).

However, the shape of the side walls 231a and 231b is not limited thereto, and the pair of side walls 231a and 231b may have any other suitable shapes, including non-symmetrical shapes.

Referring to FIG. 6 and FIG. 7, the pair of side walls 231a and 231b spaced apart from each other may be respectively on opposite sides of the element component 5.

Referring to FIGS. 3, 4, 5, and 7, a bottom wall 231c of the mounting body 231 connects the pair of side walls 231a and 231b to each other, and a thermal conductor 235 may be on the inner surface (e.g., the upper surface) of the bottom wall 231c facing the element component 5.

Referring to FIG. 7B, the thermal conductor 235 may be between the element component 5 and the bottom wall 231c.

Accordingly, the thermal conductor 235 may be in contact not only with opposite sides of the element component 5, but also with the surface (the bottom surface illustrated in FIG. 7) connecting the two opposite sides.

Referring to FIGS. 2 to 6 and FIG. 8, the mounting body 231 may include an engagement protrusion 233 on one side.

With the mounting body 231 mounted on the housing 210, the engagement protrusion 233 may be arranged on a same plane (or substantially a same plane) as the plurality of engagement protrusions 212.

This ensures that when the cover 250 to be described later is combined with the engagement protrusions 212 and 233, the cover 250 is stably combined with the engagement protrusions 212 and 233 on the same plane (or substantially the same plane).

In addition, the mounting body 231 may be prevented (or at least mitigated) from being detached from the housing 210.

The thermal conductor 235 may be on the inner surface of the mounting body 231 facing the element component 5 and may be in contact with the element component 5 accommodated inside the mounting body 231.

In one or more embodiments, the thermal conductor 235 may include a thermally conductive binder and a thermally conductive inorganic mixture.

In one or more embodiments, the thermally conductive binder may be a binder having a thermal conductivity of approximately 1.0 W/m·k or more, such as approximately 1.5 W/m·k or more.

The thermally conductive binder may be epoxy, silicone, polyurethane, alumina, or the like, for example.

The thermally conductive inorganic filler mixture may be a mixture of alumina (Al₂O₃), silica (SiO₂), aluminum nitride (AIN), boron nitride (BN), silicon carbide (SiC), copper (Cu), silver (Ag), aluminum (Al), or the like, for example.

Typically, when a current is passed through the element component 5, heat is generated due to internal resistance, which may cause the element component 5 to malfunction or fail.

The thermal conductor 235 may include such materials having high thermal conductivity and may be arranged to be in contact with the element component 5, thereby allowing for the dissipation of heat generated from the element component 5.

Accordingly, the thermal conductor 235 is configured to prevent (or at least mitigate) the risk of fire and the functional deterioration of the element component 5 caused by heat generation in the battery disconnect device 200.

In addition, the heat dissipation through contact between the element component 5 and the thermal conductor 235 may provide effective heat dissipation without changing other components in the battery disconnect device 200 to components having higher specifications (e.g., components having a higher thermal rating), thereby reducing manufacturing costs and ensuring reliability of the battery pack 1.

The thermal conductor 235 may be formed by applying a thermally conductive binder and a thermally conductive inorganic filler mixture as described above to the inner surface of the mounting body 231 and curing the applied materials.

In an embodiment of the present disclosure, the thermal conductor 235 may be applied in advance to the mounting body 231 and then the mounting body 231 may be mounted on the housing 210.

In the related art, a thermal conductor 235 was applied between the mounting body 231 and the element component 5 after the element component 5 was accommodated in the mounting body 231.

Accordingly, there was a problem in that it was difficult to apply the thermal conductor 235 to an area in a confined space, and the thermal conductor 235, which was in a liquid state prior to curing, splashed or flowed to other areas, thereby reducing the quality and mass production yield of the battery disconnect device 200.

In addition, another problem was that even after applying the thermal conductor 235, a long curing time was required, or in some cases, separate post-processing, such as ultraviolet exposure, heat treatment, or the like, was required, so that the production of the battery pack 1 took a long time.

By attaching the mounting body 231 with the thermal conductor 235 pre-applied thereto to the housing 210 and arranging the element component 5 inside the mounting body 231, the present disclosure has the effect of improving the quality and mass production yield of the battery disconnect device 200 compared to the related art configuration and manufacturing method.

The present disclosure has a further effect of reducing the manufacturing time by attaching the mounting part 230 with the thermal conductor 235, which has been cured and then post-processed after being pre-applied to the mounting part 230, to the housing 210.

Referring to FIGS. 2, 3, 4, 7, and 8, the thermal conductors 235 may be respectively arranged on the side walls 231a and 231b and the bottom wall 231c of the mounting body 231.

Referring to FIGS. 7A and 7B, the thermal conductors 235 may be arranged on the side walls 231a and 231b of the mounting body 231 to be in contact with opposite sides of the element component 5.

As an optional embodiment, the thermal conductors 235 may be arranged on the inner sides of the side walls 231a and 231b to the same level (or substantially the same level) as the height of the side walls 231a and 231b.

Referring to FIG. 7C, the thermal conductors 235 may be respectively arranged on the side walls 231a and 231b and the bottom wall 231c of the mounting body 231 to be in contact with the areas on opposite sides of the element component 5 and the surface (e.g., the bottom surface in FIG. 7C) connecting the opposite sides.

Accordingly, in response to heat being generated by the element component 5, the heat is easily dissipated by the thermal conductor 235, which may come into contact with the element component 5, and the risk of fire due to heat generation is prevented (or at least mitigated).

In an embodiment of the present disclosure, the inner surface of the thermal conductor 235 may have the same shape (or substantially the same shape) as the outer surface of the element component 5, around which the thermal conductor is wrapped, as illustrated in FIG. 7C.

This is configured to ensure that the element component 5 and the thermal conductor 235 come into close contact with each other, thereby improving the heat dissipation effect.

Referring to FIG. 2 and FIG. 9, the cover 250 is configured to be attached to the housing 210 such that the open end face of the housing 210 is covered. The cover 250 may include a first cover body 251 and a second cover body 255.

The cover 250 may include at least one engagement hole 252 into which the at least one engagement protrusion 212 may be engaged.

The engagement between the engagement hole 252 and the engagement protrusion 212 is configured to ensure that when the cover 250 is attached to one side of the housing 210, the cover 250 is stably fixed and attached.

Referring to FIG. 2, the first cover body 251 may be attached to the open end face of the housing 210, and may have, on one side, a path for a cable to be connected to the element component 5.

The engagement hole 252 may be arranged on one side of the first cover body 251 opposite the housing 210 such that the engagement protrusion 212 may be engaged with the engagement hole 252.

In an embodiment of the present disclosure, the engagement hole 252 may have a roughly 'U' shape extending toward the housing 210 such that the engagement protrusion 212 may be engaged into the engagement hole 252.

However, the engagement hole 252 is not limited to this configuration, and it may be modified into various shapes, such as a 'V shape', an 'O shape', or the like. within the technical idea that a connection between the cover and the housing 210 is achieved by the engagement with engagement protrusion 212.

Referring to FIG. 9, a plurality of engagement holes 252 may be provided so that the plurality of engagement holes 252 may be respectively engaged with a plurality of engagement protrusions 212 arranged on the outer surface of the housing 210.

At least one of the engagement holes 252 may be engaged with an engagement protrusion 233 arranged on the mounting body 231.

The engagement hole 252 may also be configured to be engaged with the engagement protrusion 233 of the mounting part 230, which is arranged in the same plane (or substantially the same plane) as the engagement protrusion 212 of the housing 210, when the mounting part 230 attached to the housing 210.

Accordingly, the first cover body 251 is attached to the housing 210 and the mounting part 230 attached thereto by the plurality of engagement holes 252.

This is configured to ensure that the mounting part 230, which is detachably connected to the housing 210, is stably mounted without being inadvertently detached from the housing 210.

Referring to FIG. 2 and FIG. 9, at least one engagement protrusion 253 may be arranged on the outer surface of the first cover body 251.

In one or more embodiments, a plurality of engagement protrusions 253 may be on the outer surface of the first cover body 251, and the engagement protrusions 253 may be configured to be fastened to the second cover body 255 that is arranged on one side (e.g., the upper side) of the first cover body 251.

Referring to FIG. 2 and FIG. 9, the second cover body 255 may be coupled to the first cover body 251, and the second cover body 255 may be arranged on the outermost side of the battery disconnect device 200 to protect components inside the housing 210 from the external environment.

Referring to FIG. 2 and FIG. 9, at least one engagement hole 255h may be on the outer surface of the second cover body 255 and may be configured to be engaged with the at least one engagement protrusion 253.

This ensures that the second cover body 255 is stably engaged and combined with the first cover body 251.

Referring to Fig. 9, the engagement protrusions 212 and 233 on the housing 210 and the mounting part 230, respectively, may be engaged and coupled with the first cover body 251, and the engagement protrusions 253 on the first cover body 251 may be engaged and coupled with the second cover body 255.

In one or more embodiments, the engagement protrusions 212 and 233 and the engagement protrusion 253 may be alternately arranged on opposite sides (left side and right side in FIG. 9), such that engagement between the engagement protrusions 212 and 233 and the engagement holes 252 and the engagement between the engagement protrusion 253 and the engagement hole 255h may also be alternately arranged on opposite sides.

This ensures that even when an impact is applied from the outside, the connection between the housing 210, the mounting part 230, the first cover body 251, and the second cover body 255 may be stably maintained without being easily released.

Referring to FIG. 2 and FIG. 8, a bus bar 270 electrically connects a plurality of element components 5, and one end of the bus bar 270 may be arranged to be in contact with the element component 5.

Referring to FIG. 8, the bus bar 270 may be bent several times inside the housing 210.

The bus bar 270 may be connected to the element components 5 in various ways, for example, by bolting, joining, or welding.

The bus bar 270 connects multiple element components 5 to provide a path for current to flow, and the bus bar 270 may include a material with relatively high electrical conductivity and thermal conductivity. For example, the bus bar 270 may include a metal material, such as copper, aluminum, silver, or the like.

Referring to FIG. 2 and FIG. 8, one side of the bus bar 270 may be connected to the element component 5, and the opposite side may be connected to another element component 5 or another component inside the housing 210.

This ensures that the mounting part 230 and the element component 5 accommodated in the mounting part 230 may be stably fixed inside the housing 210.

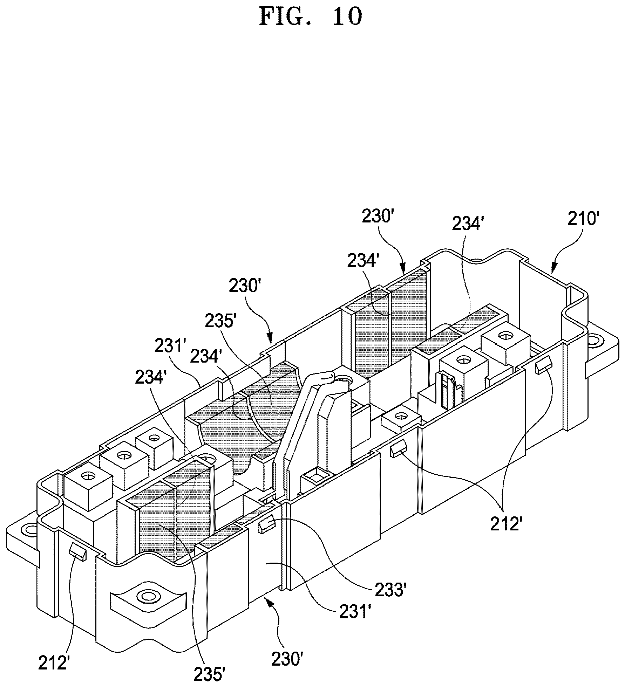

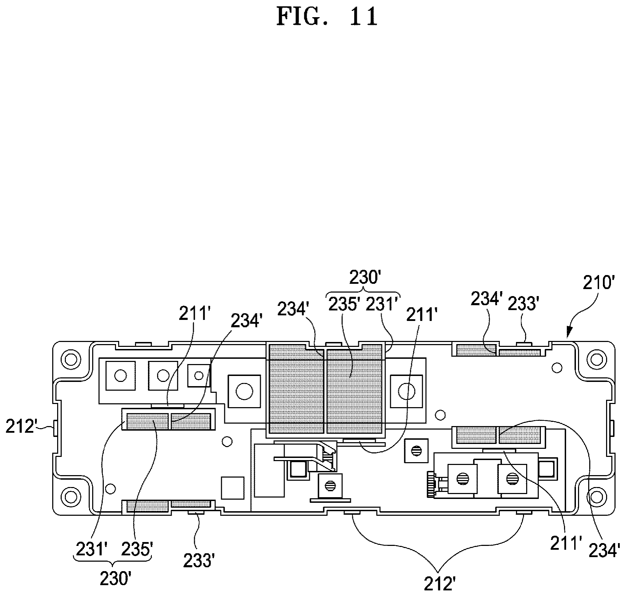

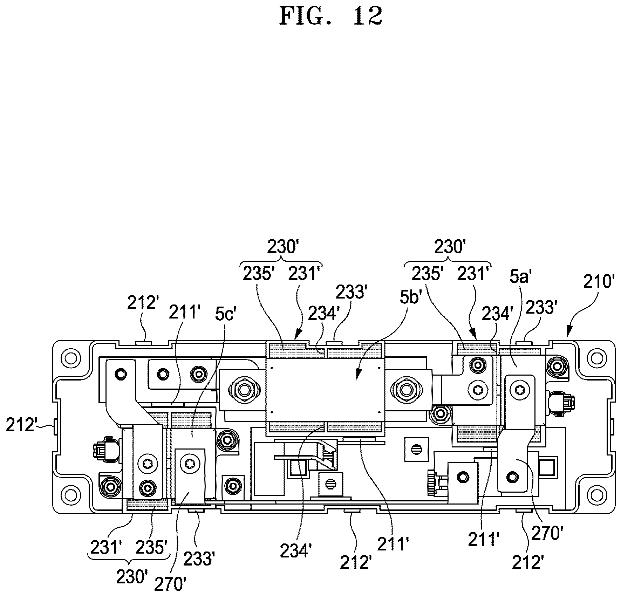

FIG. 10 is a perspective view illustrating a mounting part mounted on a housing according to another embodiment of the present disclosure. FIG. 11 is a plan view of FIG. 10. FIG. 12 is a plan view illustrating a bus bar mounted on the housing of FIG. 10.

Compared to the battery disconnect device 200 described above, a battery disconnect device 200' according to another embodiment differs in that it includes a partition wall 234' extending from a mounting body 231', which will be described below.

Referring to FIGS. 10, 11, and 12, the partition wall 234' may extend from the mounting body 231' to divide an inner area of a mounting part 230' into a plurality of sub-areas.

Referring to FIGS. 11 and 12, the partition wall 234' may divide the inner area of the mounting part 230' into two sub-areas.

However, the partition wall is not limited to this configuration, and a plurality of partition walls 234' may be provided to divide the inner area of the mounting part 230' into multiple sub-areas (e.g., three or more sub-areas).

A thermal conductor 235' may be applied to a selected sub-area(s) of the plurality of sub-areas divided by the partition wall 234'.

In some embodiments, the thermal conductor 235' may be applied to some (but not all) selected sub-area(s) of the plurality of sub-areas divided by the partition walls 234'.

For example, in an embodiment in which two partition walls 234' are provided in the mounting part 230' to divide the inner area of the mounting part 230' into three sub-areas (e.g., three equal or substantially equal sub-areas), the respective sub-area corresponding to one third of the thermal conductor originally arranged on the mounting part may include the thermal conductor 235'.

As such, the thermal conductor 235' arranged inside the mounting body 231' may be controlled to be applied to selected sub-area(s) of the plurality of sub-areas divided by the partition walls 234'.

Accordingly, the thermal conductivity may be controlled depending on the amount of current flowing through the element component 5 accommodated in the mounting body 231', thereby reducing production costs and improving manufacturability.

In the related art, an element component 5 was arranged in a mounting body 231' and then a thermal conductor 235' was applied between the mounting body 231' and the element component 5.

This caused a problem that the amount of thermal conductor 235' applied was not properly controlled, or the thermal conductor 235', which was in a liquid state prior to curing, splashed or flowed to other areas in the housing 210', resulting in a reduction in the quality and mass production yield of the battery disconnect device 200'.

In addition, another problem was that even after applying the thermal conductor 235', a long curing time was required, or in some cases, separate post-processing, such as ultraviolet exposure, heat treatment, or the like, was required, so that the production took a long time.

By attaching the mounting body 231' with the thermal conductor 235' already applied thereto to the housing 210', the present disclosure has the effect of improving the quality and mass production yield and reducing the manufacturing time of the battery disconnect device 200' compared to the related art configuration and production method.

The operating principles and effects of the battery disconnect device 200 or 200' according to the embodiments of the present disclosure will now be described.

Referring to FIGS. 1 to 12, the battery disconnect device 200 according to an embodiment of the present disclosure may include the housing 210, the at least one element component 5, the mounting part 230, the cover 250, and the bus bar 270.

Referring to FIGS. 2, 6, 7, and 8, the mounting part 230 may be fixedly received in the housing 210 having the open end face.

The mounting part 230 may include the mounting body 231 configured to be detachably attached to the housing 210 and the thermal conductor 235 arranged on the inner surface of the mounting body 231.

Referring to FIGS. 3 and 5, the mounting part 230 may be detachably fitted into the mounting groove 211 in the surface of the housing 210 opposite the mounting part 230.

In some embodiments, the mounting protrusion 232 may be on one side of the mounting body 231 such that the mounting part 230 may be stably fixed in the housing 210 by the engagement between the mounting protrusion 232 and the mounting groove 211.

Referring to FIG. 3, the mounting body 231 may include the pair of side walls 231a and 231b which are facing each other and spaced apart from each other, and the thermal conductors 235 may be on the inner surfaces of the pair of side walls 231a and 231b and contact opposite sides of the element component 5 accommodated in the mounting body 231.

In addition, the mounting body 231 may further include the bottom wall 231c connecting the pair of side walls 231a and 231b to each other, and the thermal conductor 235 may be additionally arranged between the element component 5 accommodated in the mounting body 231 and the bottom wall 231c.

Accordingly, the thermal conductors 235 may be in contact with areas on opposite sides of the element component 5 and the surface (the bottom surface in FIG. 7B) connecting the opposite sides.

The element component 5 may include at least one of the positive relay 5a, the fuse 5b, or the negative relay 5c, and the element component 5 may be mounted inside the housing 210 and in contact with the thermal conductor 235 in the mounting part 230.

This is configured to ensure that the heat generated by the current flowing through the element component 5 is dissipated to the outside.

The thermal conductor 235 may include a thermally conductive binder and a thermally conductive inorganic mixture, and the thermal conductor 235 may be pre-applied to the inside of the mounting body 231 and then cured.

Pre-applying and curing the thermal conductor 235 enables the immediate placement of the element component 5 in the mounting part 230 without the need for additional time for the applied thermal conductor 235 to cure or for separate post-processing, such as ultraviolet exposure, heat treatment, or the like, thereby reducing manufacturing time.

In addition, as compared to the related art configuration in which the thermal conductor 235 is applied to the inside of the mounting body 231 that is formed integrally with the housing 210, the configuration according to embodiments of the present disclosure in which the mounting body 231 having a selected amount of thermal conductor 235 pre-applied thereto is then coupled to the housing 210 has the effect of improving the quality and mass production yield of the battery disconnect device 200.

Referring to FIGS. 2 and 8, the bus bar 270 may be on the element components 5 accommodated in the mounting part 230 such that the bus bar 270 may be in contact with the element components 5 and electrically connect the element components 5.

One side of the bus bar 270 may be connected to one of the element components 5, and the opposite side of the bus bar 270 may be connected to another element component 5 or another electrical component in the housing 210.

The bus bar 270 may be connected to the element component 5 and other electrical components in various ways, for example, by bolting, joining, welding, or the like, so that the element component 5 may be stably fixed in the housing 210.

The cover 250 may then be attached to the housing 210 to cover the open end face of the housing 210.

Referring to FIGS. 2 and 9, the cover 250 may include the first cover body 251 and the second cover body 255.

The plurality of engagement holes 252 may be arranged on the outer surface of the first cover body 251 so that the plurality of engagement protrusions 212 arranged on the outer surface of the housing 210 are fitted into some of the plurality of engagement holes 252 when the first cover body 251 is attached to the housing 210 to cover open end face (e.g., the open upper side) of the housing 210.

At the same time, other engagement holes 252 (those not engaged by the engagement protrusions 212 of the housing 210) may be engaged with the engagement protrusions 233 on one surface of each of the mounting bodies 231 mounted on the housing 210.

In one or more embodiments, the engagement protrusions 212 and 233 arranged on the housing 210 and the mounting body 231 may be arranged in the same plane (or substantially the same plane).

This ensures that the first cover body 251, the housing 210, and the mounting part 230 may be stably connected together, and in some embodiments, the mounting part 230 may be firmly fixed to the housing 210 without being inadvertently detached from the housing 210.

Referring to FIGS. 2 and 9, the second cover body 255 may be provided on one side (upper surface in FIG. 2) of the first cover body 251 to engage with the first cover body 251.

The engagement holes 255h in the outer surface of the second cover body 255 may be engaged with the engagement protrusions 253 on the outer surface of the first cover body 251.

This ensures that the first cover body 251 and the second cover body 255 are stably connected and engaged with each other.

Referring to FIGS. 10 to 12, according to another embodiment of the present disclosure, the partition wall 234' may be provided on the mounting body 231' to divide the inner area of the mounting part 230' into a plurality of sub-areas.

The thermal conductor 235' may be applied to a selected sub-area(s) of the plurality of sub-areas divided by the partition walls 234', and thermal conductivity of the thermal conductor 235' provided in the mounting body 231' may be controlled such that the thermal conductor is applied to some (but not all) selected sub-area(s) of the plurality of sub-areas divided by the partition walls 234'.

This ensures that the thermal conductivity may be controlled depending on the amount of current flowing through the element component 5 accommodated in the mounting body 231', thereby having the effect of reducing production costs and improving manufacturability.

The battery disconnect device 200 or 200' according to the embodiments of the present disclosure may have the effect of improving the ease of manufacture by detachably attaching the mounting body 231, 231', to which the thermal conductor 235, 235' is pre-applied, to the housing 210.

In addition, the present disclosure may achieve effective heat dissipation without changing other components to those having higher specifications (e.g., components having a higher thermal rating) by arranging the element component, which generates heat, to be in contact with the thermal conductor.

In addition, the plurality of engagement holes on the outer surface of the cover may engage with the plurality of engagement protrusions on the housing and the mounting body, thereby causing the mounting part to be stably attached to the housing without being inadvertently detached from the housing.

In addition, the thermal conductivity may be controlled in response to the amount of current flowing through the element component accommodated in the mounting body, thereby having the effect of reducing production costs and improving mass production yield.

Although the disclosure has been described above with respect to limited embodiments and drawings, the disclosure is not limited thereto, and it is obvious that various modifications and variations are possible within the scope of the technical idea of the disclosure and the equivalent scope of the patent claims to be described below by a person skilled in the art to which the disclosure pertains.

## Claims

1. A battery disconnect device comprising:
a housing (210; 210') comprising an open end face; and
a mounting part (230, 230') comprising:
a mounting body (231; 231') accommodating an element component (5) therein and configured to be detachably connected to the housing (210; 210'); and
a thermal conductor (235; 235') on an inner surface of the mounting body (231; 231') and in contact with the element component (5).

2. The battery disconnect device of claim 1, wherein:
the housing (210; 210') comprises a mounting groove (211) on one side of the housing (210; 210') opposite to the mounting body (231; 231'), and
the mounting body (231; 231') comprises a mounting protrusion (232) configured to be fitted into the mounting groove (211).

3. The battery disconnect device of claim 1 or claim 2, wherein:
the mounting body (231; 231') comprises a pair of side walls (231a; 231b) facing each other and spaced apart from each other; and
the thermal conductor (235; 235') is on inner surfaces of each of the pair of the side walls (231a; 231b) and in contact with opposite sides of the element component (5).

4. The battery disconnect device of claim 3, wherein the mounting body (231; 231') further comprises a bottom wall (231c) connecting the pair of side walls (231a; 231b) to each other.

5. The battery disconnect device of claim 4, wherein the thermal conductor (235; 235') is between the element component (5) and the bottom wall (231c).

6. The battery disconnect device of any one of claims 1 to 5, wherein the mounting body (231') further comprises a partition wall (234') dividing an inner area of the mounting part (230') into a plurality of sub-areas.

7. The battery disconnect device of claim 6, wherein the thermal conductor (235') is on at least one sub-area of the plurality of sub-areas divided by the partition wall (234').

8. The battery disconnect device of any one of claims 1 to 7, wherein the thermal conductor (235; 235') comprises a thermally conductive binder and a thermally conductive inorganic mixture.

9. The battery disconnect device of any one of claims 1 to 8, wherein the element component (5) comprises at least one of a positive relay (5a), a negative relay (5b), or a fuse (5c).

10. The battery disconnect device of any one of claims 1 to 9, further comprising a cover (250) configured to be coupled to the housing (210; 210') to cover the open end face of the housing (210; 210').

11. The battery disconnect device of claim 10, wherein:
the housing (210; 210') comprises at least one engagement protrusion (212, 212') on an outer surface of the housing (210; 210'), and
the cover (250) comprises at least one engagement hole (252) into which the at least one engagement protrusion (212, 212') is configured to be fitted.

12. The battery disconnect device of claim 11, wherein:
the at least one engagement hole (252) comprises a plurality of engagement holes (252), and
the mounting body (231; 231') includes an engagement protrusion (233, 233') configured to be fitted into at least one of the plurality of engagement holes (252).

13. The battery disconnect device of any one of claims 1 to 12, wherein:
the element component (5) comprises a plurality of element components, and
the battery disconnect device (200, 200') further comprising a bus bar (270, 270') electrically connecting the plurality of element components to each other.

14. A battery pack comprising:
a plurality of battery modules (100) connected in series or in parallel; and
the battery disconnect device (200, 200') of any one of claims 1 to 13 electrically connected to the plurality of battery modules (100).
